# EUROPÄISCHE PATENTSCHRIFT

(11) **EP 2 501 932 B1**
(45) Veröffentlichungstag und Bekanntmachung des Hinweises auf die Patenterteilung: **06.05.2015**
(21) Anmeldenummer: 10773597.9
(22) Anmeldetag: 14.10.2010
(51) Int. Cl.: F03D 11/00, H01M 10/42, H01M 2/10, H01M 10/615, H01M 10/627, H01M 10/63

(54) **Schaltschrank für eine Windkraftanlage**
Control cabinet for a wind turbine
Armoire de commande pour une installation éolienne

(30) Priorität: 17.11.2009 DE 202009018040 U
(43) Veröffentlichungstag der Anmeldung: 26.09.2012
(73) Patentinhaber: SSB Wind Systems GmbH & Co. KG, 48499 Salzbergen (DE)
(72) Erfinder: BERTOLOTTI, Fabio, 48455 Bad Bentheim (DE); KESTERMANN, Hermann, 48432 Rheine (DE); THIER, Marc-Andre, 59387 Ascheberg (DE); BUELTEL, Tobias, 48431 Rheine (DE); UPSING, Josef, 48432 Rheine (DE); DAEMBERG, Tobias, 49932 Thuine (DE); WIBBEN, Norbert, 48499 Salzbergen (DE)
(86) Internationale Anmeldenummer: PCT/EP2010/065377
(87) Internationale Veröffentlichungsnummer: WO 2011/061016

(56) Entgegenhaltungen:
- EP-A1- 1 791 413
- DE-A1-102008 019 755
- DE-U1-202005 007 450
- US-A- 5 198 638

## Beschreibung

Die Erfindung betrifft einen Schaltschrank für eine Windkraftanlage, mit einem einen Innenraum begrenzenden Schrankkörper, der eine umlaufende Wandung aufweist, einer oder mehreren in dem Innenraum angeordneten elektrischen Schaltungen, und einem oder mehreren elektrischen Energiespeichermodulen, die mit dem Schrankkörper verbunden, an einer Außenseite des Schrankkörpers angeordnet und lösbar an diesem befestigt sind. Ferner betrifft die Erfindung ein elektrisches Energiespeichermodul für einen derartigen Schaltschrank.

Ein elektrischer Schaltschrank wird z.B. in Form eines Steuerschranks in einer Windkraftanlage zur Notstromversorgung einer Blattwinkelverstelleinrichtung (Pitchsystem) eingesetzt, die zur Verstellung eines oder mehrerer Rotorblätter der Windkraftanlage dient. Die Notstromversorgung umfasst einen oder mehrere Energiespeicher, die bei einem Netzausfall oder bei einer Netzstörung die Energieversorgung der Blattwinkelverstelleinrichtung aufrechterhalten.

Eine solche Notstromversorgung ist beispielsweise aus der DE 103 38 127 B4 bekannt. Als Energiespeicher werden aufladbare Akkumulatoren verwendet, die in einem oder mehreren separaten Schränken (Akkuschränke) angeordnet sind. Alternativ können auch Kondensatoren, wie z.B. sogenannte Ultracaps, als Energiespeicher verwendet werden. Der Steuerschrank (der auch als Umrichterschrank bezeichnet wird) sowie die Akkuschränke sind in der Regel im rotierenden Teil der Windkraftanlage angeordnet, insbesondere in deren Rotornabe. Die Schränke sind dabei extremen klimatischen und mechanischen Beanspruchungen ausgesetzt und müssen bezüglich ihres Aufbaus entsprechend ausgelegt sein. Der Steuerschrank und der Akkuschrank sind aufgrund der beengten Platzverhältnisse in der Nabe regelmäßig eng beieinander angeordnet und zum Teil auch schon in Form von Modulen ausgebildet, die in einem in mehrere Bereiche unterteilten Gehäuse vorgesehen sind. Die Bereiche bilden oder umfassen dabei die Module, wobei das Gehäuse von einer gemeinsamen Abdeckung verschlossen wird.

Ein beheizbarer Akkuschrank mit Akkuelementen ist aus der DE 10 2008 038 740 A1 bekannt. Dieser Akkuschrank umfasst mehrere Akkumulatoren, die in Gruppen (sog. Akku-Packs) angeordnet sind. Nach einer bestimmten Zeit ist der Ladezyklus der Akkus erschöpft, sodass diese ausgewechselt werden müssen. Eine Möglichkeit zum Auswechseln der Akku-Packs ist der DE 10 2008 038 740 A1 allerdings nicht zu entnehmen. Üblicherweise werden die Akkuschaltschränke zum Auswechseln der Akku-Packs geöffnet und anschließend wieder verschlossen. Aufgrund der beengten Platzverhältnisse in der Rotornabe einer Windkraftanlage ist ein derartiger Austausch aber nur schwer durchführbar.

Aus der den allgemeinen Schaltschrankbau betreffenden DE 10 2004 007 728 B4 sind Schaltschränke- oder Rackanordnungen mit einer Elektrifiziereinrichtung in Form von Akkueinheiten bekannt, wobei die Akkus in einer vertikalen Tragevorrichtung aufgenommen sind. Der Schaltschrank weist zum Auswechseln der Akkus eine Schwenkvorrichtung auf, mit der die Tragvorrichtung aus ihrer Position im Schaltschrank heraus schwenkbar ist, um die Akkus auszutauschen. Eine derartige Schwenkvorrichtung ist zwar grundsätzlich auch für Schaltschränke in Windkraftanlagen denkbar, allerdings ergeben sich nicht unerhebliche Anforderungen an die Abdichtung der Schwenkvorrichtung. Ferner wird für das Schwenken der Schwenkvorrichtung ausreichend Freiraum benötigt, was aufgrund der beengten Platzverhältnisse in der Rotornabe einer Windkraftanlage problematisch ist.

Die US 5 198 638 A offenbart einen Schaltschrank mit einem Gehäuseteil und zwei Fußteilen, die zusammen einen Raum definieren, in den eine schubladenförmige Batterieaufnahme einschiebbar ist, die eine mehrere Batterien umfassende Batterieanordnung aufnimmt. Zwischen dem Boden der Aufnahme und der Batterieanordnung ist eine Heizung angeordnet, wobei zwischen der Heizung und der Batterieanordnung eine Aluminiumplatte sitzt. Die Heizung wird von einer an der Aufnahme vorgesehenen Steuerung geregelt.

Die DE 20 2005 007 450 U1 beschreibt einen Adapter zum Befestigen von Rotorblättern einer Windkraftanlage an einer Rotornabe einer Rotorwelle der Windkraftanlage, mit einem Anschlussbereich für das Rotorblatt und einem Anschlussbereich für die Rotornabe, wobei am Adapter wenigstens eine Messeinrichtung für auf den Adapter wirkende Belastungen angebracht ist. Am Adapter ist ein Antrieb angebracht, um das Rotorblatt gegenüber der Rotornabe zu verdrehen. Ferner ist am Adapter eine Steuereinheit angebracht, die mit dem Antrieb verbunden ist.

Die EP 1 791 413 A1 offenbart einen Schaltschrank zur Aufnahme von elektrischen und elektronischen Bau- und Schaltelementen, der einer Rotation ausgesetzt ist und der mindestens ein Kühlgerät mit einem in seinem Innenraum liegenden Kälte abgebenden Geräteteil und einem außerhalb des Schaltschrankes liegenden Wärme abgebenden Geräteteil aufweist.

Ausgehend von der US 5 198 638 A liegt der Erfindung die Aufgabe zugrunde, einen Schaltschrank der eingangs genannten Art für den Einsatz an oder in einer Windkraftanlage geeignet weiterzubilden. Insbesondere soll der Schaltschrank zur Aufnahme von elektrischen Schaltungen von Blattwinkelverstelleinrichtungen geeignet ausgebildet sein.

Diese Aufgabe wird erfindungsgemäß mit einem Schaltschrank nach Anspruch 1 gelöst. Bevorzugte Weiterbildungen der Erfindung sind in den Unteransprüchen gegeben.

Der erfindungsgemäße Schaltschrank für eine Windkraftanlage umfasst einen einen Innenraum begrenzenden Schrankkörper, der eine umlaufende Wandung aufweist, eine oder mehrere in dem Innenraum angeordnete elektrische Schaltungen sowie ein oder mehrere elektrische Energiespeichermodule, die mit dem Schrankkörper verbunden, an einer Außenseite des Schrankkörpers angeordnet und lösbar an diesem befestigt sind, wobei der Schrankkörper an oder in einer einen Rotor mit mehreren Rotorblättern umfassenden Windkraftanlage befestigt ist und der Innenraum durch eine oder mehrere Trennwände in mehrere Innenraumbereiche unterteilt ist, deren Anzahl größer oder gleich der Anzahl der Rotorblätter ist.

Die Trennwände stellen in diesem Fall sicher, dass ein in einem der Innenraumbereiche losgelöstes Bauteil lediglich die in diesem Innenraumbereich angeordnete elektrische Schaltung beschädigen kann. Eine durch das losgelöste Bauteil hervorgerufene Beschädigung der elektrischen Schaltungen in anderen Raumbereichen wird durch die Trennwände verhindert.

Durch die lösbare Befestigung des oder der an der Außenseite des Schrankkörpers angeordneten Energiespeichermodule an dem Schrankkörper ist ein Austausch des oder der Energiespeichermodule möglich, ohne den Schaltschrank öffnen zu müssen. Hierdurch wird der Austausch des oder der Energiespeichermodule bei beengten Platzverhältnissen deutlich vereinfacht. Ferner können mit dem Öffnen des Schaltschranks verbundene Dichtigkeitsprobleme vermieden werden. Da das oder die Energiespeichermodule nicht in dem Innenraum des Schaltschranks angeordnet sind, kann der Schrankkörper relativ klein ausgebildet werden, sodass der Schaltschrank insgesamt in einer akzeptablen Größe gehalten werden kann. Beispielsweise sind sechs oder zwölf Energiespeichermodule an der Außenseite des Schrankkörpers angeordnet. Es ist aber auch eine andere Anzahl von Energiespeichermodulen möglich.

Vorzugsweise ist der Schrankkörper an oder in dem Rotor befestigt, der um eine Rotorachse drehbar ist und eine Rotornabe aufweist, an der die Rotorblätter gelagert sind, die sich jeweils entlang einer quer oder im Wesentlichen quer zur Rotorachse verlaufenden Blattachse von der Rotornabe wegerstrecken. Bevorzugt ist der Schrankkörper in der Rotornabe angeordnet und insbesondere an dieser befestigt.

Gemäß einer Weiterbildung der Erfindung ist jedem der Rotorblätter eine Blattwinkelverstelleinrichtung zugeordnet, mittels welcher das jeweilige Rotorblatt um seine Blattachse drehbar ist, wobei jede der Blattwinkelverstelleinrichtungen insbesondere eine oder wenigstens eine der elektrischen Schaltungen umfasst.

Insbesondere ist jedem der Rotorblätter ein Innenraumbereich der Innenraumbereiche zugeordnet, in dem die elektrische Schaltung der dem jeweiligen Rotorblatt zugeordneten Blattwinkelverstelleinrichtung angeordnet ist.

Gemäß einer Ausgestaltung der Erfindung umfasst der Schrankkörper zwei Stirnseiten, die vorzugsweise geschlossen sind, wobei zumindest eine der Stirnseiten bevorzugt als abnehmbarer Deckel ausgebildet ist. Somit ist der Innenraum zu Reparatur- und Wartungszwecken zugänglich. Die andere der Stirnseiten bildet z.B. einen Boden. Ferner kann die andere Stirnseite nahe an eine Wand herangebracht werden, die z.B. durch die Außenwand der Rotornabe gebildet ist. Somit ist ein relativ großer Freiraum zum Abnehmen des Deckels in der Rotornabe erzielbar. Die Stirnseiten des Schrankkörpers sind daher vorzugsweise frei von dem oder den Energiespeichermodulen. Bevorzugt sind das oder die Energiespeichermodule an der Außenseite der Wandung angeordnet. Dabei kann eine aus den Energiespeichermodulen gebildete Anordnung den Schrankkörper umringen.

Vorteilhaft sind an dem Schrankkörper elektrische Anschlüsse vorgesehen, die insbesondere mit der oder den elektrischen Schaltungen elektrisch verbunden sind. Diese elektrischen Anschlüsse sind bevorzugt außen an dem Schrankkörper vorgesehen und/oder von außen zugänglich. Die elektrischen Verbindungen zwischen den Anschlüssen und der oder den Schaltungen erstrecken sich vorzugsweise durch den Schrankkörper, insbesondere durch dessen Wandung hindurch. Vorteilhaft sind an einem oder mehreren der Anschlüsse das oder die Energiespeichermodule elektrisch angeschlossen. Insbesondere sind das oder die Energiespeichermodule über den einen oder die mehreren Anschlüsse elektrisch mit der oder den Schaltungen verbunden. Bevorzugt sind das oder die Energiespeichermodule lösbar mit dem einen oder den mehreren Anschlüssen verbunden. Insbesondere sind das oder die Energiespeichermodule jeweils unter Ausbildung einer Steckverbindung mit dem einen oder den mehreren Anschlüssen verbunden. Somit ist es möglich, das oder die Energiespeichermodule von außen elektrisch mit der oder den Schaltungen zu verbinden. Ferner ist es möglich, das oder die Energiespeichermodule von außen elektrisch von der oder den Schaltungen zu trennen.

Gemäß einer Weiterbildung der Erfindung sind das oder die Energiespeichermodule gleitfähig und/oder verschiebbar an dem Schrankkörper gelagert. Insbesondere sind das oder die Energiespeichermodule in einer Führungsrichtung gleitfähig und/oder verschiebbar an dem Schrankkörper gelagert. Somit können das oder die Energiespeichermodule, insbesondere in Führungsrichtung, von dem Schrankkörper abgezogen werden. Hierdurch ist eine deutliche Reduzierung des Arbeitsaufwands zum Austausch des oder der Energiespeichermodule erzielbar. Die Führungsrichtung verläuft vorzugsweise parallel oder im Wesentlichen parallel zur Rotorachse, sodass die Drehung des Rotors keine oder lediglich relativ geringe Kräfte in Führungsrichtung auf das oder die Energiespeichermodule ausübt. Ferner ist es möglich, mehrere, insbesondere zwei der Energiespeichermodule in Führungsrichtung hintereinander anzuordnen. Bevorzugt sind an der Außenseite des Schrankkörpers, insbesondere an der Außenseite der Wandung, Führungen, vorzugsweise in Form von Gleitführungen, vorgesehen, mittels welchen das oder die Energiespeichermodule gleitfähig und/oder verschiebbar an dem Schrankkörper geführt sind. Vorzugsweise sind das oder die Energiespeichermodule mittels der Führungen in Führungsrichtung gleitfähig und/oder verschiebbar an dem Schrankkörper geführt. Das oder die Energiespeichermodule können direkt an den Führungen geführt sein. Alternativ können aber auch ein oder mehrere Schubelemente vorgesehen sein, welche das oder die Energiespeichermodule aufnehmen und gleitfähig und/oder verschiebbar an den Führungen geführt sind. Das oder die Schubelemente können z.B. jeweils in Form einer Schublade oder dergleichen ausgebildet sein.

Gemäß einer Weiterbildung der Erfindung sind an der Wandung Stützen oder Träger angeordnet, die an der Außenseite der Wandung sitzen und fest mit dieser verbunden sind. Das oder die Energiespeichermodule sind vorzugsweise an den Trägern (Stützen) gelagert, insbesondere befestigt. Bevorzugt bilden oder umfassen die Träger die Führungen, an denen das oder die Energiespeichermodule gleitfähig geführt sind, vorzugsweise in Führungsrichtung. Die Träger können auch zur Versteifung des Schrankkörpers dienen. Vorzugsweise bestehen die Träger aus Stahl. Insbesondere sind die elektrischen Anschlüsse an den Trägern vorgesehen.

Die Umfangskontur der Wandung bildet bevorzugt ein Vieleck, insbesondere ein Sechseck. Die Träger sind bevorzugt an wenigstens zwei Ecken oder an den Ecken der Wandung angeordnet. Die Träger können somit auch als Eckträger bezeichnet werden.

Bei relativ niedrigen Umgebungstemperaturen kann die Funktion des oder der Energiespeichermodule beeinträchtigt werden. Gemäß einer Ausgestaltung der Erfindung umfassen das oder die Energiespeichermodule jeweils ein oder wenigstens ein Heizelement, mittels welchem das jeweilige Energiespeichermodul erwärmt werden kann. Das Heizelement ist z.B. in Form einer elektrischen Heizung ausgebildet. Gemäß einer Weiterbildung der Erfindung umfassen das oder die Energiespeichermodule jeweils einen oder wenigstens einen Temperatursensor, mittels welchem die Temperatur des jeweiligen Energiespeichermoduls gemessen werden kann. Die Temperatur jedes Energiespeichermoduls ist somit regelbar. Vorzugsweise sind das oder die Heizelemente sowie der oder die Temperatursensoren jedes Energiespeichermoduls mit einer Temperaturregelung gekoppelt. Dabei kann für jedes der Energiespeichermodule oder für eine Gruppe aus mehreren der Energiespeichermodule jeweils eine separate Temperaturregelung vorgesehen sein.

Ferner kann die Funktion des oder der Energiespeichermodule bei relativ hohen Umgebungstemperaturen beeinträchtigt werden. Gemäß einer Ausgestaltung der Erfindung umfasst der Schaltschrank und/oder jedes der Energiespeichermodule ein oder mehrere Kühlelemente, mittels welchen das oder die Energiespeichermodule gekühlt werden können. Das oder die Kühlelemente sind z.B. in Form von Peltier-Elementen ausgebildet. Ferner sind das oder die Kühlelemente vorzugsweise an den Trägern vorgesehen. Dies bietet den Vorteil, dass das oder die Kühlelemente in enge räumliche Nähe zu dem oder den Energiespeichermodulen gebracht und gleichzeitig relativ einfach elektrisch beschaltet werden können, da im Bereich der Träger in der Wandung des Schrankkörpers vorzugsweise Kabeldurchführungen vorgesehen sind, durch welche sich insbesondere die elektrischen Verbindungen zwischen den Anschlüssen und der oder den Schaltungen hindurch erstrecken. Ferner sind Peltier-Elemente relativ teuer, sodass auch aus diesem Grund das oder die Kühlelemente vorzugsweise außerhalb des oder der Energiespeichermodule angeordnet sind. Hierdurch können die Kosten für die Energiespeichermodule relativ gering gehalten werden. Das oder die Energiespeichermodule werden vorzugsweise durch Konvektion gekühlt.

Durch das oder die Heizelemente, den oder die Temperatursensoren sowie das oder die Kühlelemente ist eine Klimatisierung des oder der Energiespeichermodule möglich, sodass diese in einem optimalen Arbeitstemperaturbereich gehalten werden können. Das oder die Kühlelemente sind dazu vorzugsweise mit der oder den Temperaturregelungen gekoppelt. Die Blattwinkelverstelleinrichtungen umfassen bevorzugt jeweils einen oder wenigstens einen elektrischen und/oder elektrisch betätigbaren Blattwinkelverstellantrieb, der vorzugsweise mechanisch mit dem jeweiligen Rotorblatt gekoppelt ist. Insbesondere sind die Blattwinkelverstellantriebe außerhalb des Schrankkörpers angeordnet. Vorzugsweise sind die Blattwinkelverstellantriebe jeweils an einen der Anschlüsse elektrisch angeschlossen. Insbesondere sind die Blattwinkelverstellantriebe über diese Anschlüsse elektrisch mit den Schaltungen verbunden. Bevorzugt ist jeder der Blattwinkelverstellantriebe lösbar mit dem jeweiligen Anschluss verbunden. Insbesondere ist jeder der Blattwinkelverstellantriebe unter Ausbildung einer Steckverbindung mit dem jeweiligen Anschluss verbunden. Somit ist es möglich, die Blattwinkelverstellantriebe von außen elektrisch mit der oder den Schaltungen zu verbinden. Ferner ist es möglich, die Blattwinkelverstellantriebe von außen elektrisch von der oder den Schaltungen zu trennen.

Gemäß einer Ausgestaltung der Erfindung ist der Rotor an einem Maschinenträger um die Rotorachse drehbar gelagert. Bevorzugt sind an einen oder mehreren der Anschlüsse jeweils eine oder mehrere elektrische Verbindungsleitungen elektrisch angeschlossen, die, vorzugsweise über eine Schleifringanordnung, zu dem Maschinenträger geführt sind. Somit ist es möglich, mit der oder den elektrischen Schaltungen von einem Ort aus elektrisch zu kommunizieren, der außerhalb des Rotors liegt. Insbesondere sind die eine oder die mehreren elektrischen Verbindungsleitungen mit einer Stromversorgungseinrichtung und/oder mit einer Steuereinrichtung der Windkraftanlage elektrisch verbunden, wobei die Stromversorgungseinrichtung und/oder die Steuereinrichtung vorzugsweise außerhalb des Rotors vorgesehen sind.

Bei Ausfall oder Störung der Stromversorgung der elektrischen Schaltungen und/oder der Blattwinkelverstellantriebe können die elektrischen Schaltungen und/oder die Blattwinkelverstellantriebe mittels des oder der Energiespeichermodule weiterbetrieben werden. Insbesondere können die Blattwinkelverstelleinrichtungen bei Ausfall oder Störung ihrer Stromversorgung mittels des oder der Energiespeichermodule weiterbetrieben werden. Das oder die Energiespeichermodule bilden somit eine Notstromversorgung für die elektrischen Schaltungen und/oder die Blattwinkelverstellantriebe und/oder die Blattwinkelverstelleinrichtungen.

Das oder die elektrischen Energiespeichermodule umfassen bevorzugt jeweils einen oder mehrere elektrische Energiespeicher, die z.B. jeweils als Akkumulator oder als elektrischer Kondensator ausgebildet sind. Das oder die elektrischen Energiespeichermodule umfassen somit bevorzugt jeweils einen oder mehrere Akkumulatoren und/oder elektrische Kondensatoren. Die Akkumulatoren werden auch als Batterien bezeichnet, wobei es sich hier vorzugsweise um aufladbare Batterien handelt. Bei den Akkumulatoren handelt es sich bevorzugt um Bleiakkumulatoren. Als Kondensatoren werden vorzugsweise Doppelschicht-Kondensatoren, insbesondere sogenannte Ultracaps, eingesetzt. Beispielsweise sind sechs oder acht Energiespeicher je Energiespeichermodul vorgesehen. Es ist aber auch eine andere Anzahl von Energiespeichern je Energiespeichermodul möglich.

Gemäß einer Weiterbildung der Erfindung ist der Schrankkörper aus mehreren Segmenten zusammengesetzt, die jeweils einen einen Segmentinnenraum begrenzenden Segmentkörper umfassen, der eine umlaufende Segmentwandung aufweist. Die Segmentinnenräume bilden jeweils einen Teil des Innenraums des Schrankkörpers, wobei äußere Wandteile der Segmentwandungen jeweils einen Teil der Wandung bilden. Die Segmentinnenräume bilden insbesondere die Innenraumbereiche des Schrankkörpers, wobei die Trennwände durch die Segmentwandungen gebildet sind. Dieser modulare Aufbau des Schaltschranks bietet Fertigungsvorteile, insbesondere da die Segmente vorzugsweise gleichartig aufgebaut sind. An jeder der Segmentwandungen ist außenseitig bevorzugt eines oder wenigstens eines der Energiespeichermodule befestigt. Vorzugsweise sind an jeder der Segmentwandungen außenseitig mehrere der Energiespeichermodule befestigt. Ferner ist in jedem der Segmentinnenräume insbesondere jeweils eine oder wenigstens eine der elektrischen Schaltungen angeordnet.

Der Schrankkörper ist bevorzugt radial mittig in der Rotornabe angeordnet. Somit sind der oder die Energiespeichermodule einfach zugänglich, insbesondere wenn diese an der Wandung angeordnet sind. Der Schrankkörper kann ferner bezüglich der Rotorachse axial mittig in der Rotornabe oder an der Außenwand der Rotornabe angeordnet sein.

Die Erfindung betrifft ferner eine Windkraftanlage mit einem an einem Maschinenträger um eine Rotorachse drehbar gelagerten sowie eine Rotornabe und mehrere an dieser gelagerte Rotorblätter umfassenden Rotor, die sich jeweils in Richtung einer quer oder im Wesentlichen quer zur Rotorachse verlaufenden Blattachse von der Rotornabe wegerstrecken, wobei in der Rotornabe ein erfindungsgemäßer Schaltschrank angeordnet ist. Die erfindungsgemäße Windkraftanlage kann gemäß allen im Zusammenhang mit dem erfindungsgemäßen Schaltschrank erläuterten Ausgestaltungen weitergebildet sein.

Insbesondere sind die Rotorblätter der Windkraftanlage mittels Blattwinkelverstelleinrichtungen um ihre Blattachsen relativ zur Rotornabe drehbar, wobei vorzugsweise jede der Blattwinkelverstelleinrichtungen eine oder wenigstens eine der in dem Schrankkörper angeordneten elektrischen Schaltungen umfasst.

Die Erfindung betrifft auch ein elektrisches Energiespeichermodul für einen Schaltschrank, mit einem Gehäuse und einem oder mehreren in dem Gehäuse angeordneten elektrischen Energiespeichern, wobei das Gehäuse lösbar an einer Außenseite eines Schrankkörpers des Schaltschranks befestigbar oder befestigt ist und wobei in der Gehäusewandung eine Entgasungsvorrichtung angeordnet ist, mittels welcher von dem oder den Energiespeichern abgegebene Gase nach außen abführbar sind. Bei dem Schaltschrank handelt es sich-insbesondere um einen erfindungsgemäßen Schaltschrank. Das Energiespeichermodul kann gemäß allen im Zusammenhang mit dem erfindungsgemäßen Schaltschrank erläuterten Ausgestaltungen weitergebildet sein. Ferner ist der erfindungsgemäße Schaltschrank gemäß allen im Zusammenhang mit dem erfindungsgemäßen elektrischen Energiespeichermodul erläuterten Ausgestaltungen weiterbildbar.

Gemäß einer Ausgestaltung des Energiespeichermoduls ist in dem Gehäuse ein oder wenigstens ein Heizelement, z.B. in Form einer elektrischen Heizung, angeordnet, mittels welchem der oder die Energiespeicher erwärmbar sind. Dies ist vorteilhaft, da die Funktionsfähigkeit des Energiespeichermoduls unterhalb bestimmter Temperaturen beeinträchtigt ist. Bevorzugt ist zwischen dem Heizelement und dem oder den Energiespeichern ein wärmeleitendes Zwischenelement angeordnet. Durch das Zwischenelement kann die von dem Heizelement abgegebene Wärme möglichst gleichmäßig an den oder die Energiespeicher abgegeben werden. Der oder die Energiespeicher werden vorzugsweise durch Konvektion erwärmt. Ferner sind der oder die Energiespeicher bevorzugt in einer wärmeisolierenden Umhüllung angeordnet, die in dem Gehäuse vorgesehen ist. Hierdurch kann eine rasche Auskühlung des oder der Energiespeicher verhindert werden. Das Heizelement und/oder das wärmeleitende Zwischenelement sind vorzugsweise ebenfalls in der wärmeisolierenden Umhüllung angeordnet.

Gemäß einer Weiterbildung des Energiespeichermoduls ist in dem Gehäuse ein oder wenigstens ein Temperatursensor angeordnet, der insbesondere mit dem oder den Energiespeichern in wärmeleitendem Kontakt steht. Das Heizelement und der Temperatursensor können somit an eine Temperaturregelung angeschlossen werden, mittels welcher die Temperatur des oder der Energiespeicher regelbar ist. Die Temperaturregelung ist vorzugsweise in dem Schrankkörper angeordnet.

Der oder die Energiespeicher sind insbesondere mittels einer Halterung in dem Gehäuse fixiert. Bevorzugt ist die Halterung durch einen Spanner oder Spannbügel gebildet. Vorzugsweise sind der oder die Energiespeicher mittels der Halterung lösbar in dem Gehäuse fixiert, sodass ein Austausch des oder der Energiespeicher möglich ist.

Die Entgasungsvorrichtung umfasst z.B. eine gasdurchlässige Membran, sodass Flüssigkeiten nicht durch die Entgasungsvorrichtung hindurchtreten können. Alternativ kann die Entgasungsvorrichtung aber auch als Ventil ausgebildet sein. Gase können insbesondere bei einer starken Belastung der Energiespeicher von diesen abgegeben werden.

Bevorzugt weist das Gehäuse eine Kabeldurchführung auf, durch welche ein mit dem oder den Energiespeichern elektrisch verbundenes Kabel aus dem Gehäuse herausgeführt ist. Das Kabel ist insbesondere an einem der elektrischen Anschlüsse angeschlossen oder anschließbar.

Gemäß einer Weiterbildung der Erfindung weist jeder der Energiespeicher einen oder wenigstens einen Akkumulator oder einen oder wenigstens einen elektrischen Kondensator auf. Bei den Akkumulatoren handelt es sich bevorzugt um Bleiakkumulatoren. Als Kondensatoren werden vorzugsweise Doppelschicht-Kondensatoren, insbesondere sogenannte Ultracaps, eingesetzt.

Das Energiespeichermodul umfasst beispielsweise sechs oder acht Energiespeicher. Es ist aber auch eine andere Anzahl von Energiespeichern möglich.

Die Erfindung wird nachfolgend anhand einer bevorzugten Ausführungsform unter Bezugnahme auf die Zeichnung beschrieben. In der Zeichnung zeigen:
- Fig. 1: eine schematische Ansicht einer Windkraftanlage mit einem Schaltschrank gemäß einer Ausführungsform der Erfindung,
- Fig. 2: eine schematische, perspektivische Darstellung des Schrankschranks,
- Fig. 3: eine Draufsicht auf den Schaltschrank,
- Fig. 4: eine perspektivische Darstellung eines Schaltschranksegments,
- Fig. 5: eine perspektivische Ansicht eines Eckträgers des Schaltschranks,
- Fig. 6: eine andere perspektivische Ansicht des Eckträgers,
- Fig. 7: eine Draufsicht auf den Eckträger,
- Fig. 8: eine Explosionsdarstellung eines Energiespeichermoduls des Schaltschranks und
- Fig. 9: eine teilweise Darstellung eines modifizierten Trägers mit einem Energiespeichermodul.

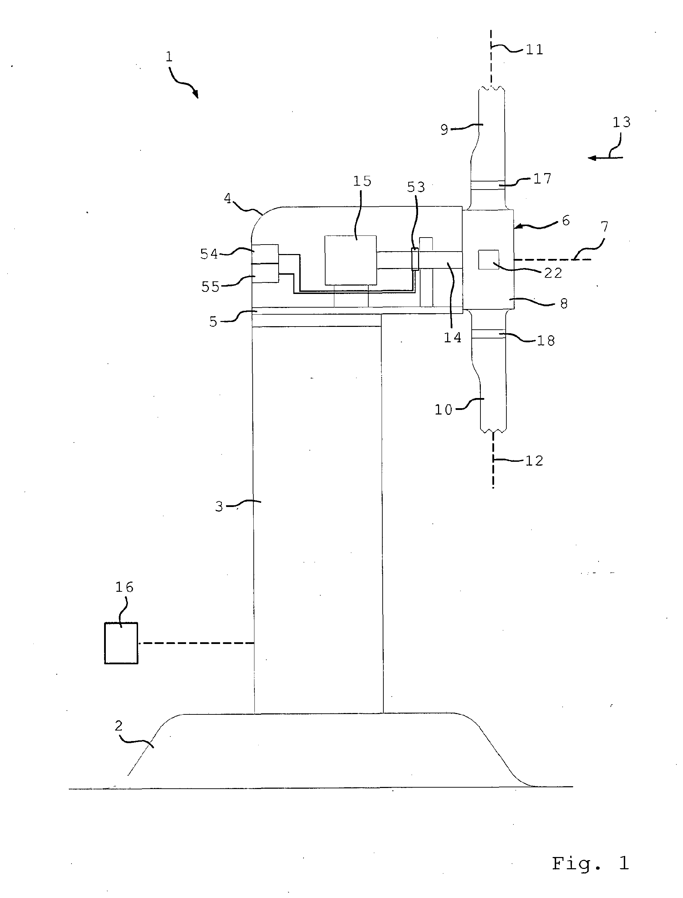

Aus Fig. 1 ist eine Windkraftanlage 1 gemäß einer Ausführungsform der Erfindung ersichtlich, wobei die Windkraftanlage 1 einen auf einem Fundament 2 aufstehenden Turm 3 umfasst, an dessen dem Fundament 2 abgewandten Ende ein Maschinenhaus 4 angeordnet ist. Das Maschinenhaus 4 weist einen Maschinenträger 5 auf, an dem ein Rotor 6 um eine Rotorachse 7 drehbar gelagert ist, der eine Rotornabe 8 und mehrere mit dieser verbundene Rotorblätter 9 und 10 umfasst, die jeweils um eine Blattachse 11 bzw. 12 drehbar an der Rotornabe 8 gelagert sind. Die Rotorblätter 9 und 10 erstrecken sich in Richtung ihrer Blattachsen 11 und 12 von der Rotornabe 8 weg, wobei die Blattachsen 11 und 12 quer zur Rotorachse 7 verlaufen. Der Rotor 6 wird durch Wind 13 um die Rotorachse 7 gedreht und ist mittels einer Rotorwelle 14 mit einem am Maschinenträger 5 befestigten elektrischen Generator 15 mechanisch gekoppelt, der von dem Rotor 6 angetrieben wird. Der Generator 15 erzeugt elektrische Energie und speist diese in ein elektrisches Netz 16 ein. Die Rotorblätter 9 und 10 sind jeweils über einen Blattwinkelverstellantrieb 17 bzw. 18 um ihre jeweilige Blattachse relativ zu der Rotornabe 8 drehbar. Der Rotor 6 umfasst ferner ein drittes Rotorblatt, welches an der Rotornabe 8 um eine quer zur Rotorachse 7 verlaufende Blattachse drehbar gelagert ist, sich in Richtung dieser Blattachse von der Rotornabe 8 wegerstreckt und relativ zu der Rotornabe um diese Blattachse mittels eines Blattwinkelverstellantriebs drehbar ist. Das dritte Rotorblatt ist aus der Darstellung gemäß Fig. 1 nicht ersichtlich. Die Rotorblätter sind rings der Rotorachse 7 gleichmäßig verteilt angeordnet, sodass zwei benachbarte Rotorachsen jeweils einen Winkel von 120° einschließen.

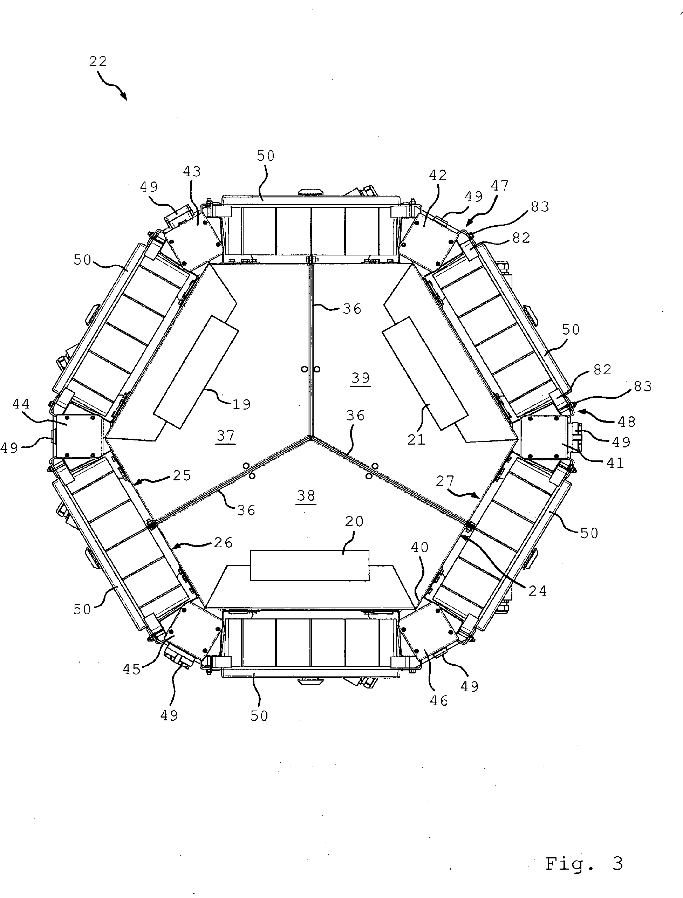

Die Blattwinkelverstellantriebe 17 und 18 sind jeweils mit einer elektrischen Schaltung 19 bzw. 20 elektrisch verbunden. Ferner ist der aus Fig. 1 nicht ersichtliche Blattwinkelverstellantrieb für das dritte Rotorblatt mit einer elektrischen Schaltung 21 verbunden. Die schematisch in Fig. 3 dargestellten elektrischen Schaltungen 19, 20 und 21 sind in einem Schaltschrank 22 angeordnet, der bezüglich der Rotorachse 7 radial mittig in der Rotornabe 8 angeordnet ist. Gemäß der Ausführungsform sind somit drei Blattwinkelverstelleinrichtungen vorgesehen, die jeweils einen der Blattwinkelverstellantriebe und eine der elektrischen Schaltungen umfassen. Dabei umfasst eine erste der Blattwinkelverstelleinrichtungen die Schaltung 19 und den Blattwinkelverstellantrieb 17, eine zweite der Blattwinkelverstelleinrichtungen die Schaltung 20 und den Blattwinkelverstellantrieb 18 und eine dritte der Blattwinkelverstelleinrichtungen die Schaltung 21 und den Blattwinkelverstellantrieb des dritten Rotorblatts. Die elektrischen Schaltungen sind mit dem jeweiligen Blattwinkelverstellantrieb elektrisch verbunden.

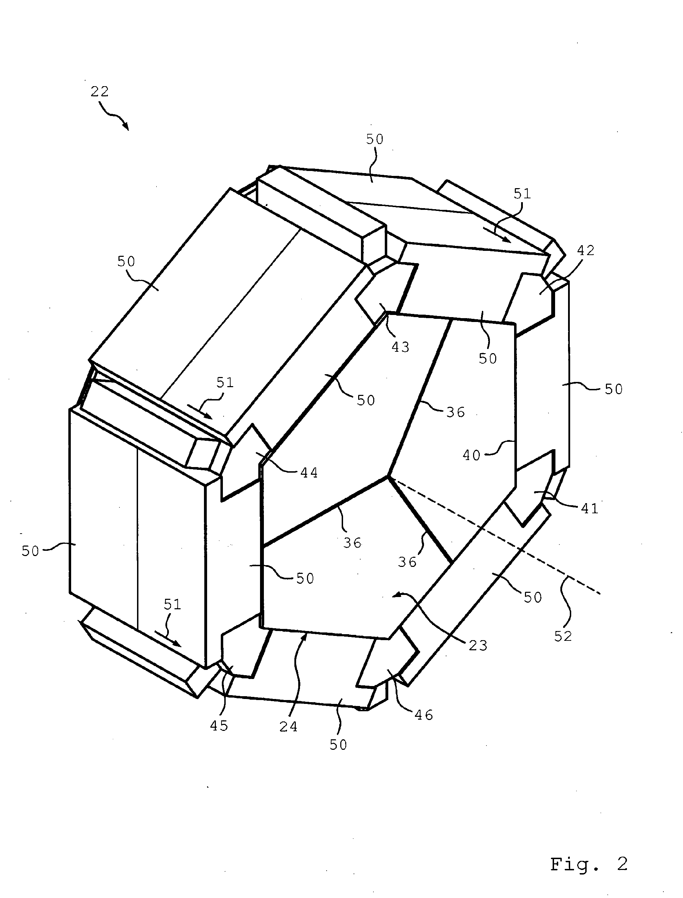

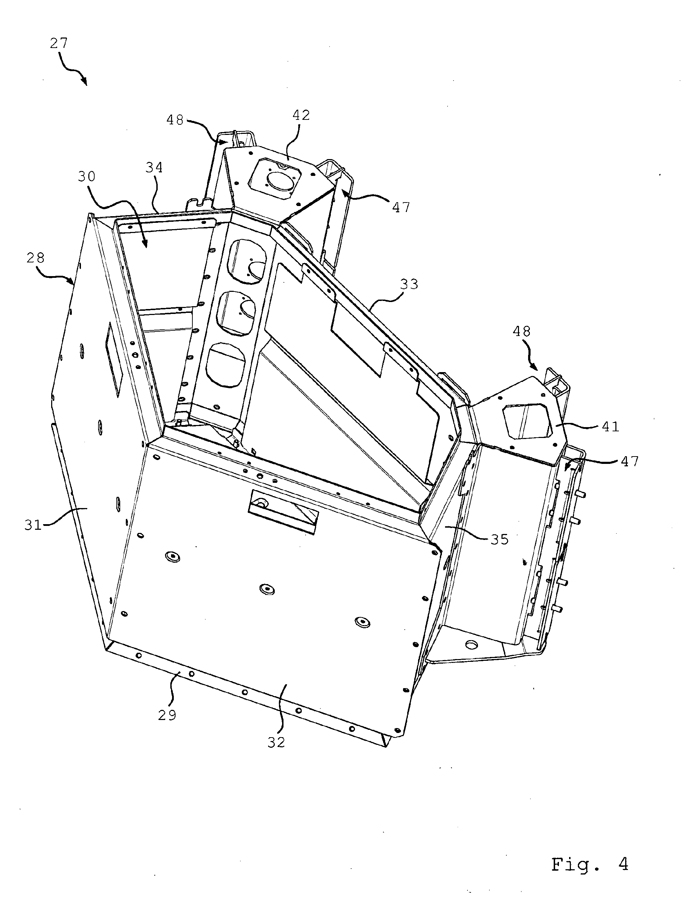

Aus den Fig. 2 und 3 sind unterschiedliche Ansichten des Schaltschranks 22 ersichtlich, der einen Innenraum 23 und einen diesen begrenzenden Schrankkörper 24 umfasst. Der Schrankkörper 24 ist aus drei Schaltschranksegmenten 25, 26 und 27 zusammengesetzt, die gleichartig aufgebaut sind. Das Schaltschranksegment 27 ist dabei in perspektivischer Darstellung aus Fig. 4 ersichtlich und umfasst eine umlaufende Segmentwandung 28 sowie einen Segmentboden 29. Die Segmentwandung 28 begrenzt einen Segmentinnenraum 30, wobei die Umfangskontur der Segmentwandung 28 fünfeckig ist. Ferner umfasst die Segmentwandung 28 innere Wandteile 31 und 32 sowie äußere Wandteile 33, 34 und 35. Die inneren Wandteile der Segmente bilden Trennwände 36, die den Innenraum 23 in drei Innenraumbereiche 37, 38 und 39 unterteilen. Jeder der Innenraumbereiche ist durch einen der Segmentinnenräume gebildet, wobei der Innenraumbereich 39 durch den Segmentinnenraum 30 des Segments 27 gebildet ist. Die äußeren Wandteile der Segmente bilden zusammen eine umlaufende Wandung 40 des Schrankkörpers 24, deren Umfangskontur hier sechseckig ausgebildet ist.

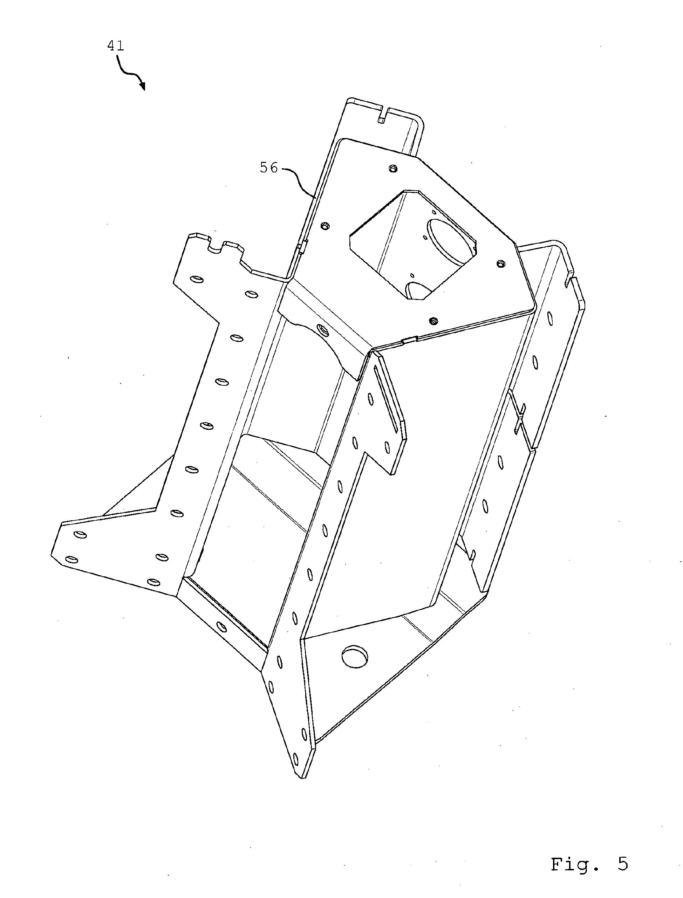

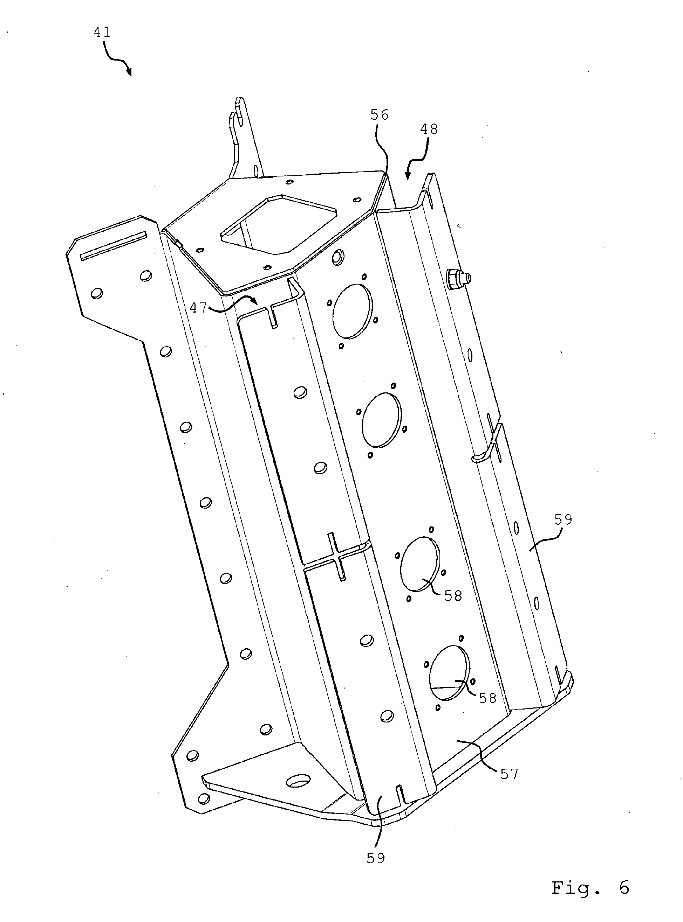

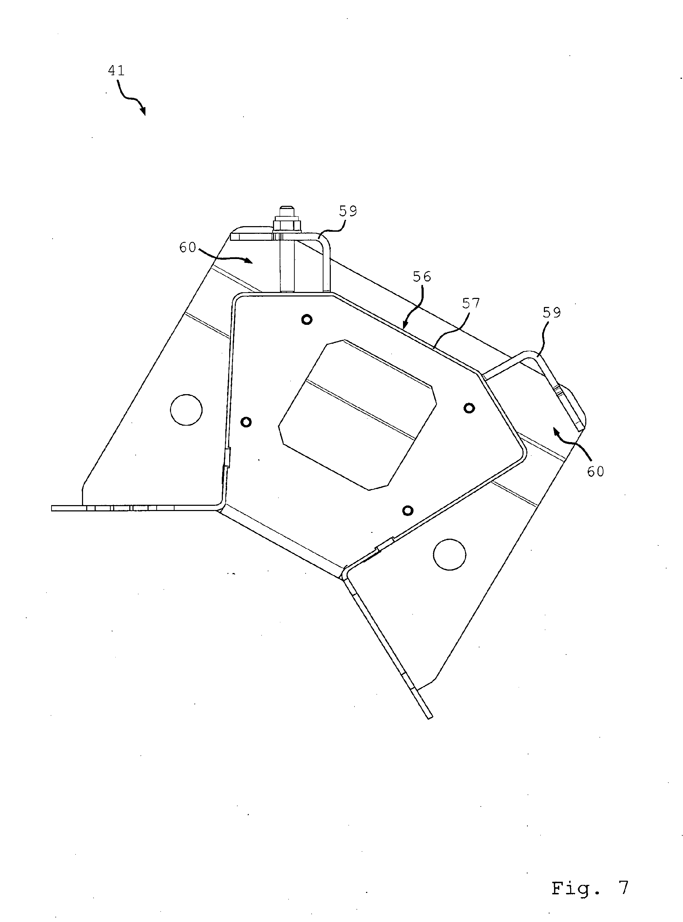

An den Ecken der Wandung 40 sind jeweils Träger (Stützen) 41, 42, 43, 44, 45 und 46 angeordnet, die auch als Eckträger (Eckstützen) bezeichnet werden können. Die Träger sind gleichartig aufgebaut und an der Wandung 40 befestigt, wobei jeder der Träger zwei Gleitführungen 47 und 48 umfasst. Der Träger 41 ist dabei in unterschiedlichen Darstellungen aus den Fig. 5 bis 7 ersichtlich. Ferner sind an den Trägern elektrische Anschlüsse 49 befestigt, die elektrisch mit den Schaltungen 19, 20 und 21 verbunden sind.

In den einander zugewandten Gleitführungen von zwei benachbarten Trägern sind jeweils zwei elektrische Energiespeichermodule 50 in einer Führungsrichtung 51 verschiebbar geführt und in dieser hintereinander angeordnet. Die Führungsrichtungen 51 verlaufen parallel zu einer Schaltschrankachse 52, die insbesondere eine Mittelachse des Schaltschranks 22 bildet und vorzugsweise mit der Rotorachse 7 zusammenfällt. Jedes der Energiespeichermodule 50 weist Vorsprünge 82 auf, die auf einander gegenüberliegenden Seiten des jeweiligen Energiespeichermoduls 50 angeordnet sind und mit den Gleitführungen 47 und 48 gleitfähig ineinander greifen. Die Fixierung der Energiespeichermodule 50 an den Trägern erfolgt durch Klemmen. Dafür sind an den Gleitführungen Schrauben 83 vorgesehen, mittels welchen die Vorsprünge 82 an den Trägern festgeklemmt werden können. Die Energiespeichermodule 50 werden durch die Gleitführungen vorzugsweise gegen die Wandung 40 gedrückt und stehen bevorzugt mit dieser in wärmeleitendem Kontakt. Dies ermöglicht z.B. einen guten Wärmeaustausch zwischen den Energiespeichermodulen 50 und dem Schrankkörper 24 durch Konvektion. Alternativ können die Energiespeichermodule 50 aber auch einen Abstand zu der Wandung 40 aufweisen.

Die Blattwinkelverstellantriebe sind jeweils mit einem der Anschlüsse 49 elektrisch verbunden. Ferner ist eine Schleifringanordnung 53 (siehe Fig. 1) mit einem der Anschlüsse 49 elektrisch verbunden, die ihrerseits mit einer Stromversorgungseinrichtung 54 und mit einer Steuereinrichtung 55 der Windkraftanlage 1 elektrisch verbunden ist. Von der Stromversorgungseinrichtung 54 werden die Blattwinkelverstelleinrichtungen, insbesondere die elektrischen Schaltungen und/oder die Blattwinkelverstellantriebe, mit elektrischem Strom versorgt. Ferner werden die Blattwinkelverstelleinrichtungen, insbesondere die elektrischen Schaltungen, mittels der Steuereinrichtung 55 gesteuert. Die elektrischen Schaltungen 19, 20 und 21 bilden ihrerseits Steuerungen für die Blattwinkelverstellantriebe, sodass diese mittels der elektrischen Schaltungen gesteuert werden. Für den Fall, dass die Stromversorgungseinrichtung 54 ausfällt, werden die Blattwinkelverstelleinrichtungen, insbesondere die elektrischen Schaltungen und/oder die Blattwinkelverstellantriebe, von den Energiespeichermodulen 50 mit elektrischem Strom versorgt. Die elektrischen Energiespeichermodule 50 bilden somit eine Notstromversorgung für die elektrischen Schaltungen und/oder für die Blattwinkelverstellantriebe.

Gemäß der Ausführungsform sind die Energiespeichermodule 50 mit Anschlüssen 49 der Stützen 42, 44 und 46 elektrisch verbunden. Die Blattwinkelverstellantriebe sind mit Anschlüssen 49 der Stützen 41, 43 und 45 elektrisch verbunden. Ferner ist die Schleifringanordnung 53 mit wenigstens einem Anschluss 49 der Stütze 45 verbunden.

Aus den Fig. 5 bis 7 ist der Träger 41 im nicht montierten Zustand ersichtlich, wobei der Träger 41 einen Grundkörper 56 mit einer Außenwand 57 aufweist, in der mehrere Löcher 58 vorgesehen sind, in denen die Anschlüsse 49 montiert werden. Ferner sind in Umfangsrichtung der Wandung 40 gesehen beidseitig der Außenwand 57 L-förmige Schienen 59 angeordnet und mit dem Grundkörper 56 fest verbunden, wobei die Schienen 59 mit dem Grundkörper 56 jeweils eine Führungsnut 60 begrenzen, die in Richtung der Schaltschrankachse 52 verläuft. Die Schienen 59 definieren somit zusammen mit dem Grundkörper 56 und den Nuten 60 die Gleitführungen 47 und 48.

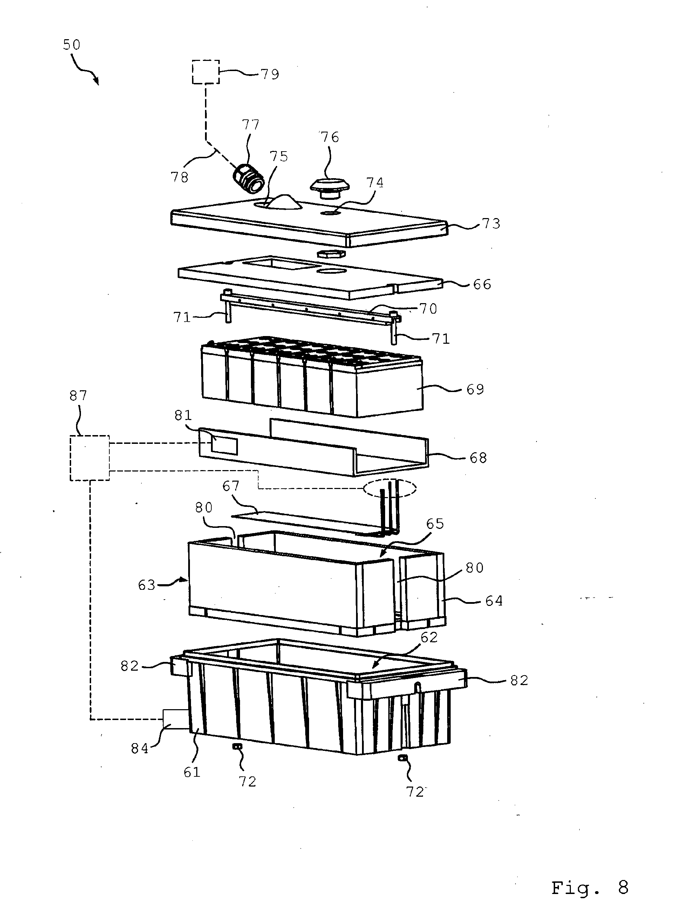

Aus Fig. 8 ist eines der Energiespeichermodule 50 in Explosionsdarstellung ersichtlich, wobei das Energiespeichermodul 50 ein Gehäuse 61 mit einem Gehäuseinnenraum 62 aufweist. Die Vorsprünge 82 des Energiespeichermoduls 50 sind an dem Gehäuse 61 vorgesehen, welches z.B. aus Kunststoff besteht. In den Gehäuseinnenraum 62 ist eine wärmeisolierende Umhüllung 63 eingebracht, die einen Basiskörper 64 mit einem Innenraum 65 sowie eine Abdeckung 66 aufweist. In den Innenraum 65 ist eine elektrische Heizung 67 eingebracht, die in wärmeleitendem Kontakt mit einem wärmeleitenden Zwischenelement 68 steht, welches z.B. aus Aluminium besteht. Das Zwischenelement 68 steht ferner in wärmeleitendem Kontakt mit mehreren elektrischen Energiespeichern 69, die zusammen mit dem Zwischenelement 68 in den Innenraum 65 eingebracht sind. Ferner steht das Zwischenelement 68 mit einem Temperatursensor 81 in wärmeleitendem Kontakt, sodass die Heizung 67 geregelt werden kann. Zum Regeln der Heizung 67 ist eine Temperaturregelung 87 vorgesehen, die sowohl mit der Heizung 67 als auch mit dem Sensor 81 elektrisch verbunden ist. Die Temperaturregelung 87 ist schematisch in Fig. 8 gezeigt und vorzugsweise in dem Schrankkörper 24 angeordnet.

Die Anordnung aus Basiskörper 64, Heizung 67, Zwischenelement 68 und Energiespeicher 69 wird mittels eines Spannbügels 70 in dem Innenraum 62 fixiert, wobei der Spannbügel 70 mittels Schrauben 71 und Muttern 72 an dem Gehäuse 61 befestigt wird. Dabei verlaufen die Schrauben 71 in Längsschlitzen 80, die in Seitenwänden der Umhüllung 63 vorgesehen sind. Vorzugsweise wird der Spannbügel 70 in den Längsschlitzen 80 eingerastet.

Der Innenraum 65 wird mittels der Abdeckung 66 abgedeckt und das Gehäuse 61 mittels eines Gehäusedeckels 73 verschlossen, der z.B. aus Kunststoff besteht. Der Gehäusedeckel 73 wird insbesondere dem Gehäuse 61 zugerechnet und weist zwei durchgehende Löcher 74 und 75 auf, wobei in dem Loch 74 eine Entgasungsvorrichtung 76 und in dem Loch 75 eine Kabeldurchführung 77 sitzt. Die Kabeldurchführung 77 dient zum Herausführen eines schematisch dargestellten Kabels 78 aus dem Gehäuse 61, wobei das Kabel 78 innerhalb des Gehäuses 61 elektrisch mit den Energiespeichern 69 verbunden ist, die elektrisch vorzugsweise in Reihe geschaltet sind. Außerhalb des Gehäuses 61 ist an das Kabel 78 ein Stecker 79 angeschlossen, der mit einem der Anschlüsse 49 elektrisch verbunden werden kann.

Schematisch ist ferner ein Peltier-Element 84 dargestellt, welches außen an dem Gehäuse 61 anliegt und mit diesem in wärmeleitendem Kontakt steht. Das Peltier-Element 84 ist mit dem Schrankkörper 24, insbesondere mit einem der Träger fest verbunden und vorzugsweise elektrisch mit der Temperaturregelung 87 gekoppelt. Mittels des Peltier-Elements 84 ist das Gehäuse 61 und somit auch das Energiespeichermodul 50 kühlbar, sodass mit Hilfe der Temperaturregelung 87 eine Klimatisierung des Energiespeichermoduls 50 möglich ist. Das Energiespeichermodul 50 steht mit dem Peltier-Element 84 vorzugsweise in gleitfähigem Kontakt, sodass dieses während eines Austausches des Energiespeichermoduls 50 am Schaltschrank 22 verbleibt. Alternativ kann das Peltier-Element 84 aber auch dauerhaft fest mit dem Energiespeichermodul 50 verbunden sein und ist diesem Fall vorzugsweise in dem Gehäuse 61 angeordnet. Bevorzugt sind mehrere Peltier-Elemente zum Kühlen des Energiespeichermoduls 50 vorgesehen.

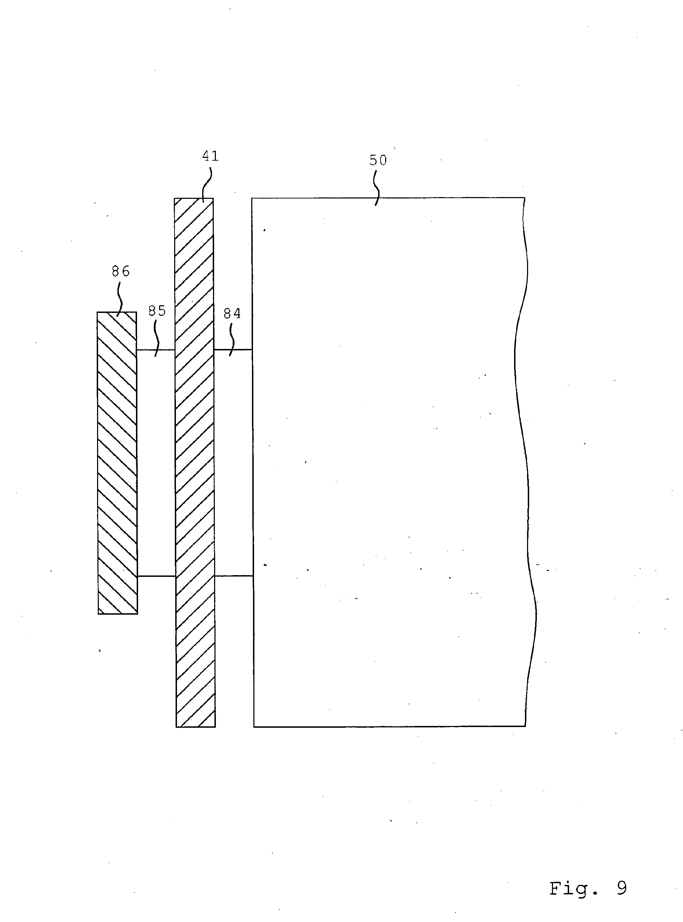

Aus Fig. 9 ist eine teilweise Darstellung eines modifizierten Trägers 41 ersichtlich, wobei zwischen dem Träger 41 und dem Energiespeichermodul 50 mehrere Peltier-Elemente 84 in Richtung der Schrankachse 52 im Abstand zueinander angeordnet sind. Die Peltier-Elemente 84 stehen sowohl mit dem Energiespeichermodul 50 als auch mit dem Träger 41 in wärmeleitendem Kontakt. Ferner sind auf einer den Peltier-Elementen 84 abgewandten Seite des Trägers 41 in Richtung der Schrankachse 52 im Abstand zueinander mehrere Peltier-Elemente 85 angeordnet, die in wärmeleitendem Kontakt mit dem Träger 41 stehen. Zusätzlich sind die Peltier-Elemente 85 auf ihrer dem Träger 41 abgewandten Seite über ein Wärmeleitelement 86 thermisch miteinander gekoppelt, welches vorzugsweise aus Aluminium besteht. Diese Anordnung berücksichtigt, dass der Träger z.B. aus Stahl besteht und somit einen relativ schlechten Wärmeleiter bildet. Die Anordnung gemäß Fig. 9 ermöglicht trotz schlechter Wärmeleiteigenschaften des Trägers 41 eine gute Kühlung des Energiespeichermoduls 50. Die Peltier-Elemente sind vorzugsweise dauerhaft fest mit dem Träger 41 verbunden.

### Bezugszeichenliste

- 1: Windkraftanlage
- 2: Fundament
- 3: Turm
- 4: Maschinenhaus
- 5: Maschinenträger
- 6: Rotor
- 7: Rotorachse
- 8: Rotornabe
- 9: Rotorblatt
- 10: Rotorblatt
- 11: Blattachse
- 12: Blattachse
- 13: Wind
- 14: Rotorwelle
- 15: Generator
- 16: elektrisches Netz
- 17: Blattwinkelverstellantrieb
- 18: Blattwinkelverstellantrieb
- 19: elektrische Schaltung
- 20: elektrische Schaltung
- 21: elektrische Schaltung
- 22: Schaltschrank
- 23: Innenraum des Schaltschranks
- 24: Schrankkörper des Schaltschranks
- 25: Schaltschranksegment
- 26: Schaltschranksegment
- 27: Schaltschranksegment
- 28: Segmentwandung
- 29: Segmentboden
- 30: Segmentinnenraum
- 31: inneres Wandteil
- 32: inneres Wandteil
- 33: äußeres Wandteil
- 34: äußeres Wandteil
- 35: äußeres Wandteil
- 36: Trennwand
- 37: Innraumbereich
- 38: Innraumbereich
- 39: Innraumbereich
- 40: Wandung des Schrankkörpers
- 41: Träger
- 42: Träger
- 43: Träger
- 44: Träger
- 45: Träger
- 46: Träger
- 47: Gleitführung
- 48: Gleitführung
- 49: elektrischer Anschluss
- 50: elektrisches Energiespeichermodul
- 51: Führungsrichtung
- 52: Schaltschrankachse
- 53: Schleifringanordnung
- 54: Stromversorgungseinrichtung
- 55: Steuereinrichtung
- 56: Grundkörper des Trägers
- 57: Außenwand des Grundkörpers
- 58: Loch in Außenwand des Grundkörpers
- 59: Schiene
- 60: Führungsnut
- 61: Gehäuse des Energiespeichermoduls
- 62: Innenraum des Gehäuses
- 63: wärmeisolierende Umhüllung
- 64: Basiskörper der Umfüllung
- 65: Innenraum der Umhüllung
- 66: Abdeckung der Umhüllung
- 67: elektrische Heizung
- 68: wärmeleitendes Zwischenelement
- 69: Energiespeicher
- 70: Spannbügel
- 71: Schraube
- 72: Mutter
- 73: Gehäusedeckel
- 74: Loch im Gehäusedeckel
- 75: Loch im Gehäusedeckel
- 76: Entgasungsvorrichtung
- 77: Kabeldurchführung
- 78: Kabel
- 79: Stecker
- 80: Längsschlitz in Umhüllung
- 81: Temperatursensor
- 82: Vorsprung des Energiespeichermoduls
- 83: Schraube an Träger
- 84: Peltier-Element
- 85: Peltier-Element
- 86: Wärmeleitelement
- 87: Temperaturregelung

## Patentansprüche

1. Schaltschrank für eine Windkraftanlage, mit einem einen Innenraum (23) begrenzenden Schrankkörper (24), der eine umlaufende Wandung (40) aufweist,
einer oder mehreren in dem Innenraum (23) angeordneten elektrischen Schaltungen (19, 20, 21),
einem oder mehreren elektrischen Energiespeichermodulen (50), die mit dem Schrankkörper (24) verbunden und an einer Außenseite des Schrankkörpers (24) angeordnet und lösbar an diesem befestigt sind,
**dadurch gekennzeichnet, dass**
der Schrankkörper (24) an oder in einer einen Rotor (6) mit mehreren Rotorblättern (9, 10) umfassenden Windkraftanlage (1) befestigt ist und der Innenraum (23) durch eine oder mehrere Trennwände (36) in mehrere Innenraumbereiche (37, 38, 39) unterteilt ist, deren Anzahl größer oder gleich der Anzahl der Rotorblätter (9, 10) ist.

2. Schaltschrank nach Anspruch 1,
**dadurch gekennzeichnet, dass**
der Schrankkörper (24) an oder in dem Rotor (6) befestigt ist, der um eine Rotorachse (7) drehbar ist und eine Rotornabe (8) aufweist, an der die Rotorblätter (9, 10) gelagert sind, die sich jeweils entlang einer quer oder im Wesentlichen quer zur Rotorachse (7) verlaufenden Blattachse (11, 12) von der Rotornabe (8) wegerstrecken.

3. Schaltschrank nach Anspruch 1 oder 2,
**dadurch gekennzeichnet, dass**
jedem der Rotorblätter (9, 10) eine Blattwinkelverstelleinrichtung zugeordnet ist, mittels welcher das jeweilige Rotorblatt (9, 10) um seine Blattachse (11, 12) drehbar ist, wobei jede der Blattwinkelverstelleinrichtungen eine der elektrischen Schaltungen (19, 20, 21) umfasst.

4. Schaltschrank nach den Ansprüchen 3,
**dadurch gekennzeichnet, dass**
jedem der Rotorblätter (9, 10) ein Innenraumbereich der Innenraumbereiche (37, 38, 39) zugeordnet ist, in dem die elektrische Schaltung der dem jeweiligen Rotorblatt zugeordneten Blattwinkelverstelleinrichtung angeordnet ist.

5. Schaltschrank nach einem der vorangehenden Ansprüche,
**dadurch gekennzeichnet, dass**
das oder die Energiespeichermodule (50) an der Außenseite der Wandung (40) angeordnet sind.

6. Schaltschrank nach einem der vorangehenden Ansprüche,
**dadurch gekennzeichnet, dass**
das oder die Energiespeichermodule (50) in einer Führungsrichtung (51) verschiebbar an dem Schrankkörper (24) gelagert und mehrere der Energiespeichermodule (50) in Führungsrichtung (51) hintereinander angeordnet sind.

7. Schaltschrank nach einem der vorangehenden Ansprüche,
**dadurch gekennzeichnet, dass**
an den Ecken der Wandung (40) Träger (41-46) angeordnet sind, die an der Außenseite der Wandung (40) sitzen und fest mit dieser verbunden sind.

8. Schaltschrank nach Anspruch 7,
**dadurch gekennzeichnet, dass**
die Träger (41-46) Führungen (47, 48) aufweisen, an denen das oder die Energiespeichermodule (50) verschiebbar geführt sind.

9. Schaltschrank nach einem der vorangehenden Ansprüche,
**dadurch gekennzeichnet, dass**
der Schrankkörper (24) aus mehreren Segmenten (27) zusammengesetzt ist, die jeweils einen einen Segmentinnenraum (30) begrenzenden Segmentkörper umfassen, der eine umlaufende Segmentwandung (28) aufweist,
die Segmentinnenräume (30) jeweils einen Teil des Innenraums (23) des Schrankkörpers (24) bilden,
äußere Wandteile (33, 34, 35) der Segmentwandungen (28) jeweils einen Teil der Wandung (40) bilden,
an jeder der Segmentwandungen (28) außenseitig wenigstens eines der Energiespeichermodule (50) befestigt ist,
und
in jedem der Segmentinnenraume (30) jeweils eine der elektrischen Schaltungen (19, 20, 21) angeordnet ist.

10. Elektrisches Energiespeichermodul für einen Schaltschrank nach einem der vorangehenden Ansprüche, mit
einem Gehäuse (61),
einem oder mehreren in dem Gehäuse (61) angeordneten elektrischen Energiespeichern (69), wobei
das Gehäuse (61) lösbar an einer Außenseite eines Schrankkörpers (24) des Schaltschranks (22) befestigbar ist, **dadurch gekennzeichnet, dass**
in der Gehäusewandung eine Entgasungsvorrichtung (76) angeordnet ist, mittels welcher von dem oder den Energiespeichern (69) abgegebene Gase nach außen abführbar sind.

11. Elektrisches Energiespeichermodul nach Anspruch 10,
**dadurch gekennzeichnet, dass**
in dem Gehäuse (61) wenigstens ein Heizelement (67) angeordnet ist, mittels welchem der oder die Energiespeicher (69) erwärmbar sind.

12. Elektrisches Energiespeichermodul nach Anspruch 10 oder 11,
**dadurch gekennzeichnet, dass**
in dem Gehäuse (69) ein Temperatursensor (81) angeordnet ist und mit dem oder den Energiespeichern (69) in wärmeleitendem Kontakt steht.

13. Elektrisches Energiespeichermodul nach Anspruch 11 oder 12,
**dadurch gekennzeichnet, dass**
zwischen dem Heizelement (67) und dem oder den Energiespeichern (69) ein wärmeleitendes Zwischenelement (68) angeordnet ist.

## Claims

1. Control cabinet for a wind turbine generator with a cabinet body (24), defining an inner chamber (23) and comprising a circumferential wall (40), with one or several electric circuits (19, 20, 21) arranged in the inner chamber (23), one or several energy storage modules (50) which are connected to the cabinet body (24) and arranged on and detachably secured to an exterior side of the cabinet body (24),
**characterized in that** the cabinet body (24) is mounted to a wind turbine (1) comprising a rotor (6) with several rotor blades (9, 10) and the inner chamber (23) is subdivided by one or several partition walls (36) into several interior sections (37, 38, 39) the number of which is higher or equal to the number of rotor blades (9, 10).

2. Switch cabinet according to claim 1, **characterised in that** the cabinet body (24) is mounted to or within the rotor (6) which is rotatable by a rotor axis (7) and has a rotor hub (8) on which the rotor blades (9, 10) are mounted that extend transverse or substantially transverse to the blade axis (11, 12) of the rotor axis (7) of the rotor hub (8).

3. The switch cabinet according to claim 1 or 2,**characterised in that** each of the rotor blades (9, 10) is assigned to a blade pitch adjustment by means of which the respective rotor blade (9, 10) is rotatable by its rotor axis (11, 12) whereby each of the blade pitch adjustments comprise one of the electric circuits (19, 20, 21).

4. The switch cabinet according to claim 3,**characterised in that** each of the rotor blades (9, 10) is assigned to an interior section of the interior sections (37, 38, 39) which houses the electric circuit of the blade pitch control device assigned to the respective rotor blade.

5. The switch cabinet according to the aforementioned claims **characterised in that** the energy storage module(s) (50) are arranged on the outside of the wall (40).

6. The switch cabinet according to the aforementioned claims **characterised in that** the energy storage module(s) (50) are mounted in guiding direction (51) to the cabinet body (24) in a movable manner and several of the energy storage modules (50) are arranged successively in guiding direction (51).

7. The switch cabinet according to the aforementioned claims, **characterised in that** supports (41-46) are arranged in the corners of the wall (40) which are affixed to the outside of the wall (40) and are firmly connected thereto.

8. The switch cabinet according to claim 7, **characterised in that** the supports (41-46) have guides (47, 48) on which the energy storage module(s) (50) are guided in a moveable manner.

9. The switch cabinet according to the aforementioned claims, **characterised in that** the cabinet body (24) is composed of several segments (27) each comprising one segment body with a circumferential segment wall (28) delimiting one segment interior each (30), the segment interiors (30) each form a part of the interior (23) of the cabinet body (24), outer wall parts (33, 34, 35) of the segment walls (28) each form a part of the wall (40), on which at least one of the energy modules (50) is mounted to the outside of each of the segment walls (28) and one of the electric circuits (19, 20, 21) is arranged in each of the segment interiors (30).

10. Electric energy storage module for a switch cabinet according to the aforementioned claims with a housing (61), one or several electric energy modules (69) arranged in the housing (61) whereby the housing (61) is detachably mounted to the outside of the cabinet body (24) of the switch cabinet (22), **characterized in that** a degassing device (7 6) is arranged in the housing wall by means of which the gases emitting from the energy storage module(s) (69) can be discharged to the exterior.

11. Electric energy storage module according to claim 10, **characterised in that** at least one heating unit (67) is arranged in the housing (61) by means of which the energy module(s) (69) can be heated.

12. Electric energy storage module according to claim 10 or 11, **characterized in that** a temperature sensor (81) is arranged in the housing (69) which has a thermal conducting contact with the energy storage module(s) (69).

13. Electric energy storage module according to claim 11 or 12, **characterized in that** a thermal conducting intermediate module (68) is arranged between the heating unit (67) and the energy storage module(s) (69).

## Revendications

1. Armoire de commande pour une éolienne, avec un corps de l'armoire (24) limitant un intérieur (23) qui présente une paroi périphérique (40), un ou plusieurs circuits électriques (19, 20, 21) disposés à l'intérieur (23), un ou plusieurs modules d'accumulateur d'énergie électrique (50) reliés au corps de l'armoire (24) et fixés à celui-ci par agencement détachable au niveau d'une face extérieure du corps de l'armoire (24),
**caractérisée en ce que** le corps de l'armoire (24) est fixé à ou dans une éolienne (1) englobant un rotor (6) composé de plusieurs pales de rotor (9, 10) et l'intérieur (23) est divisé, par une ou plusieurs cloisons (36), en plusieurs sections intérieures (37, 38, 39) dont le nombre est supérieur ou égal au nombre de pales de rotor (9, 10).

2. Armoire de commande selon la revendication 1, **caractérisée en ce que** le corps de l'armoire (24) est fixé au rotor ou dans le rotor (6), lequel est pivotable autour d'un axe du rotor (7) et présente un moyeu de rotor (8) au niveau duquel les pales du rotor (9, 10) sont logées, les pales s'étendant le long d'un axe de pale (11, 12) qui se déploie en travers ou principalement en travers de l'axe de pale (7) du moyeu du rotor (8).

3. Armoire de commande selon la revendication 1 ou 2, **caractérisée en ce que** à chacune des pales du rotor (9, 10), un dispositif de réglage de l'angle de calage de la pale est affecté au moyen duquel la pale de rotor respective (9, 10) est pivotable autour de son axe de pale (11, 12), chacun des dispositifs de réglage de l'angle de calage de la pale englobant l'un des circuits électriques (19, 20, 21).

4. Armoire de commande selon les revendications 3, **caractérisée en ce que** à chacune des pales du rotor (9, 10), une section intérieure des sections intérieures (37, 38, 39) est affectée dans laquelle le circuit électrique du dispositif de réglage affecté à la pale de rotor respective est disposé.

5. Armoire de commande selon l'une des revendications précédentes, **caractérisée en ce que** le ou les modules d'accumulateur d'énergie (50) sont disposés du côté extérieur de la paroi (40).

6. Armoire de commande selon l'une des revendications précédentes, **caractérisée en ce que** le ou les modules d'accumulateur d'énergie (50) sont disposés dans un sens de guidage (51), de façon à pouvoir être déplacés au niveau du corps de l'armoire (24), et que plusieurs des modules d'accumulateur d'énergie (50) sont disposés les uns derrière les autres dans le sens de guidage (51).

7. Armoire de commande selon l'une des revendications précédentes, **caractérisée en ce que** au niveau des angles de la paroi (40), des supports (41-46) sont disposés qui sont fixés au bord extérieur de la paroi (40) et reliés à celui-ci de manière fixe.

8. Armoire de commande selon la revendication 7, **caractérisée en ce que** les supports (41-46) présentent des guidages (47, 48) au niveau desquels le ou les modules d'accumulateur d'énergie (50) peuvent être déplacés.

9. Armoire de commande selon l'une des revendications précédentes, **caractérisée en ce que** le corps de l'armoire (24) se compose de plusieurs segments (27) qui englobent respectivement un corps de segment limitant une section intérieure de segment (30), laquelle présente une paroi de segment périphérique (28), les sections intérieures de segments (30) constituent respectivement une partie intérieure (23) du corps de l'armoire (24), les parties extérieures (33, 34, 35) des parois de segments (28) constituent respectivement une partie de la paroi (40), au niveau de chacune des parois de segments (28), à l'extérieur, au moins un des modules d'accumulateur d'énergie (50) est fixé, et dans chacune des sections intérieures de segments (30), l'un des circuits électriques (19, 20, 21) est disposé.

10. Module d'accumulateur d'énergie électrique pour une armoire de commande selon l'une des revendications précédentes, avec un boîtier (61), un ou plusieurs accumulateurs d'énergie électrique (69) disposés dans le boîtier (61), le boîtier (61) pouvant être fixés, de manière à être détachés, à une face extérieure d'un corps de l'armoire (24) de l'armoire de commande (22), **caractérisé en ce que** dans la paroi du boîtier se trouve un dispositif de dégazage (76) au moyen duquel les gaz émis par le ou les accumulateurs d'énergie (69) peuvent être dirigés vers l'extérieur.

11. Module d'accumulateur d'énergie électrique selon la revendication 10, **caractérisé en ce que** dans le boîtier (61) se trouve au moins un élément chauffant (67) à l'aide duquel le ou les accumulateurs d'énergie (69) sont chauffables.

12. Module d'accumulateur d'énergie électrique selon la revendication 10 ou 11, **caractérisé en ce que** dans le boîtier (69) se trouve un capteur de température (81) lequel est en contact thermoconducteur avec le ou les accumulateurs d'énergie (69).

13. Module d'accumulateur d'énergie électrique selon la revendication 11 ou 12, **caractérisé en ce que** entre l'élément chauffant (67) et le ou les accumulateurs d'énergie (69) se trouve un élément intermédiaire thermoconducteur (68).
